# EUROPEAN PATENT APPLICATION

(11) **EP 1 381 027 A1**
(43) Date of publication of application: **14.01.2004**
(21) Application number: 02720509.5
(22) Date of filing: 19.04.2002
(51) Int. Cl.: G10L 13/00, G10L 13/08, G10L 15/22, G10L 15/18

(54) **LANGUAGE PROCESSOR**

(30) Priority: 20.04.2001 JP 2001122040
(71) Applicant: Sony Corporation, Tokyo 141-0001 (JP)
(72) Inventor: KOBAYASHI, Erika, c/o SONY CORPORATION, Tokyo 141-0001 (JP); AKABANE, Makoto, c/o SONY CORPORATION, Tokyo 141-0001 (JP); NITTA, Tomoaki, c/o SONY CORPORATION, Tokyo 141-0001 (JP); KISHI, Hideki, c/o SONY CORPORATION, Tokyo 141-0001 (JP); HORINAKA, Rika, c/o SONY CORPORATION, Tokyo 141-0001 (JP); TAKEDA, Masashi, c/o SONY CORPORATION, Tokyo 141-0001 (JP)
(74) Representative: Mills, Julia
(86) International application number: PCT/JP2002/003899
(87) International publication number: WO 2002/086861

(57) **Abstract**

The present invention relates to a language processing apparatus capable of generating an effective synthesized sound by performing language processing taking into account an onomatopoeia or a mimetic word. An effective synthesized voice is produced from a given text such that the synthesized voice includes a "sound" representing the meaning of an onomatopoeia or a mimetic word included in the given text. An onomatopoeic/mimetic word analyzer 21 extracts the onomatopoeia or the mimetic word from the text, and an onomatopoeic/mimetic word processing unit 27 produces acoustic data of a sound effect corresponding to the extracted onomatopoeia or mimetic word. A voice mixer 26 superimposes the acoustic data produced by the onomatopoeic/mimetic word processing unit 27 on the whole or a part of the synthesized voice data, corresponding to the text, produced by a rule-based synthesizer 24. The present invention may be applied to a robot having a voice synthesizer.

## Description

### Technical Field

The present invention relates to a language processing apparatus, and more particularly, to a language processing apparatus capable of generating an effective synthesized voice by performing language processing on a text including, for example, an onomatopoeia or a mimetic word.

### Background Art

In a voice synthesizer or the like, morphological analysis is performed on an input text, and a synthesized voice corresponding to the input text is produced in accordance with the result of the morphological analysis.

According to an opinion generally accepted in linguistics, sounds of words are arbitrarily related to meanings.

However, in the case of an onomatopoeia or a mimetic word such as "glug, glug" in a text "He gulped down beer, glug, glug.", the relation between a sound of a word and the meaning thereof is not necessarily arbitrary.

That is, an onomatopoeia is a word representing a "sound" associated with an action (motion) of a subject, and a mimetic word represents a state or motion of an environment using a word indicating a "sound". Thus, onomatopoeias or mimetic words can be suitably treated as "sounds".

However, in conventional voice synthesizers, an onomatopoeia or a mimetic word included in a text is treated in the same manner as for other usual words included in the text, and thus a "sound" represented by the onomatopoeia or the mimetic word is not well reflected in a synthesized voice.

### Disclosure of the Invention

In view of the above, an object of the present invention is to provide a technique of generating an effective synthesized sound by performing language processing on a text including an onomatopoeia or a mimetic word.

Thus, the present invention provides a language processing apparatus comprising extraction means for extracting an onomatopoeia or a mimetic word from the input data, onomatopoeic/mimetic word processing means for processing the onomatopoeia or the mimetic word, and language processing means for performing language processing on the input data in accordance with a result of the processing on the onomatopoeia or the mimetic word.

The present invention also provides a language processing method comprising the steps of extracting an onomatopoeia or a mimetic word from the input data, processing the onomatopoeia or the mimetic word, and performing language processing on the input data in accordance with a result of the processing on the onomatopoeia or the mimetic word.

The present invention further provides a program comprising the steps of extracting an onomatopoeia or a mimetic word from the input data, processing the onomatopoeia or the mimetic word, and performing language processing on the input data in accordance with a result of the processing on the onomatopoeia or the mimetic word.

The present invention further provides a storage medium including a program, stored therein, comprising the steps of extracting an onomatopoeia or a mimetic word from the input data, processing the onomatopoeia or the mimetic word, and performing language processing on the input data in accordance with a result of the processing on the onomatopoeia or the mimetic word.

In the present invention, an onomatopoeia or a mimetic word is extracted from input data and the extracted onomatopoeia or mimetic word is processed. Language processing is then performed on the input data in accordance with a result of the processing on the onomatopoeia or mimetic word.

### Brief Description of the Drawings

Fig. 1 is a perspective view showing an example of an outward structure of a robot according to an embodiment of the present invention.
Fig. 2 is a block diagram showing an example of an internal structure of the robot.
Fig. 3 is a block diagram showing an example of a functional structure of a controller 10.
Fig. 4 is a block diagram showing an example of a construction of a voice synthesis unit 55.
Fig. 5 is a flow chart showing a process associated with the voice synthesis unit 55.
Fig. 6 is a flow chart showing an onomatopoeic/mimetic word process performed by the voice synthesis unit 55.
Fig. 7 is a table showing the content of a imitative sound database 31.
Fig. 8 is a flow chart showing a voice synthesis process performed by the voice synthesis unit 55.
Fig. 9 is a block diagram showing an example of a construction of a computer according to an embodiment of the present invention.

### Best Mode for Carrying Out the Invention

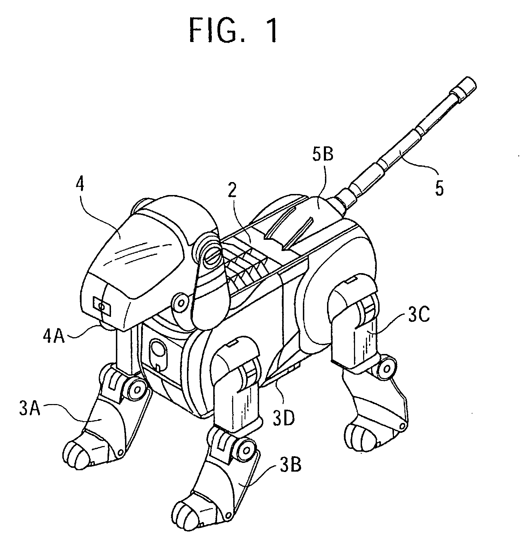

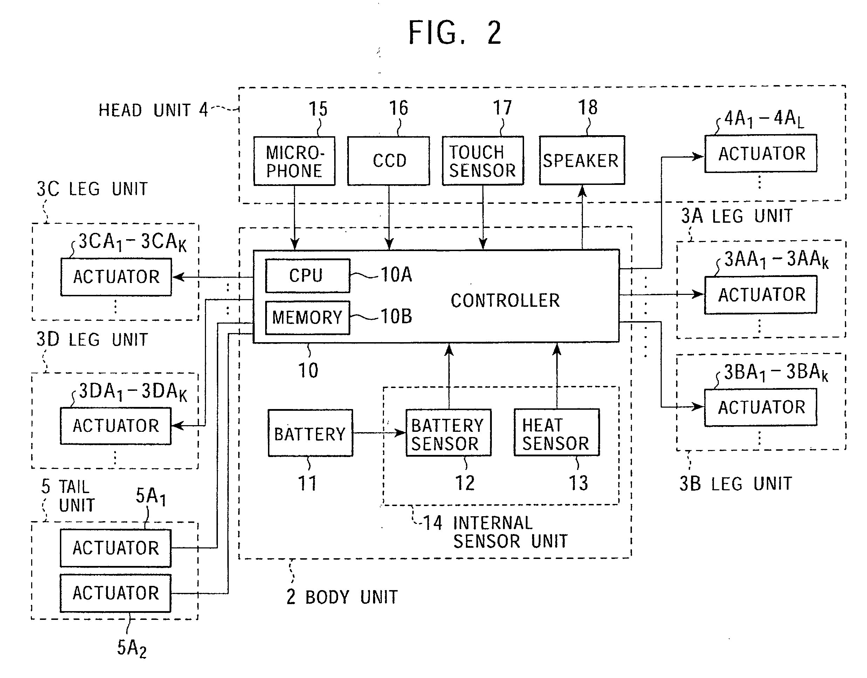

Fig. 1 shows an example of an outward structure of a robot according to an embodiment of the present invention, and Fig. 2 shows an example of an electric configuration thereof.

In the present embodiment, the robot is constructed into the form of an animal having four legs, such as a dog, wherein leg units 3A, 3B, 3C, and 3D are attached, at respective four corners, to a body unit 2, and a head unit 4 and a tail unit 5 are attached, at front and bock ends, to the body unit 2.

The tail unit 5 extends from a base 5B disposed on the upper surface of the body unit 2 such that the tail unit 5 can bend or shake with two degree of freedom.

The body unit 2 includes, in the inside thereof, a controller 10 for generally controlling the robot, a battery 11 serving as a power source of the robot, and an internal sensor unit 14 including a battery sensor 12 and a heat sensor 13.

On the head unit 4, there are disposed, at properly selected position, a microphone 15 serving as an "ear", a CCD (Charge Coupled Device) 16 serving as an "eye", a touch sensor 17 serving as a sense-of-touch sensor, and a speaker 18 serving as a "mouth". A lower jaw unit 4A serving as a lower jaw of the mouth is attached to the head unit 4 such that the lower jaw unit 4A can move with one degree of freedom. The mouth of the robot can be opened and closed by moving the lower jaw unit 4A.

As shown in Fig. 2, actuators 3AA₁ to 3AA_{K}, 3BA₁ to 3BA_{K}, 3CA₁ to 3CA_{K}, 3DA₁ to 3DA_{K}, 4A₁ to 4A_{L}, 5A₁, and 5A₂ are respectively disposed in joints for joining parts of the leg units 3A to 3D, joints for joining the leg units 3A to 3D with the body unit 2, a joint for joining the head unit 4 with the body unit 2, a joint for joining the head unit 4 with the lower jaw unit 4A, and a joint for joining the tail unit 5 with the body unit 2.

The microphone 15 disposed on the head unit 4 collects a voice (sound) including an utterance of a user from the environment and transmits an obtained voice signal to the controller 10. The CCD camera 16 takes an image of the environment and transmits an obtained image signal to the controller 10.

The touch sensor 17 is disposed on an upper part of the head unit 4 to detect a pressure applied by the user as a physical action such as "rubbing" or "tapping" and transmit a pressure signal obtained as the result of the detection to the controller 10.

The battery sensor 12 disposed in the body unit 2 detects the remaining capacity of the battery 11 and transmits the result of the detection as a battery remaining capacity signal to the controller 10. The heat sensor 13 detects heat in the inside of the robot and transmits a detection result as a heat detection signal to the controller 10.

The controller 10, including a CPU (Central Processing Unit) 10A and a memory 10B, performs various processes by executing, using the CPU 10A, a control program stored in the memory 10B.

The controller 10 detects specific external conditions, a command issued by a user to the robot, and an action applied by the user to the robot, on the basis of the voice signal, the image signal, the pressure signal, or the battery remaining capacity signal, supplied from the microphone 15, the CCD camera 16, the touch sensor 17, the battery sensor, or the heat sensor.

On the basis of the parameters detected above, the controller 10 makes a decision as to how to act next. In accordance with the decision, the controller 10 activates necessary actuators of those including actuators 3AA₁ to 3AA_{K}, 3BA₁ to 3BA_{K}, 3CA₁ to 3CA_{K}, 3DA₁ to 3DA_{K}, 4A₁ to 4A_{L}, 5A₁, and 5A₂, so as to nod or shake the head unit 4 or open and close the lower jaw unit 4A. Depending on the situation, the controller 10 moves the tail unit 5 or makes the robot walk by moving the leg units 3A to 3D.

Furthermore, as required, the controller 10 produces synthesized voice data and supplies it to the speaker 18 thereby generating a voice, or turns on/off or blinks LEDs (Light Emitting Diode, not shown in the figures) disposed on the eyes.

As described above, the robot autonomously acts in response to the environmental conditions.

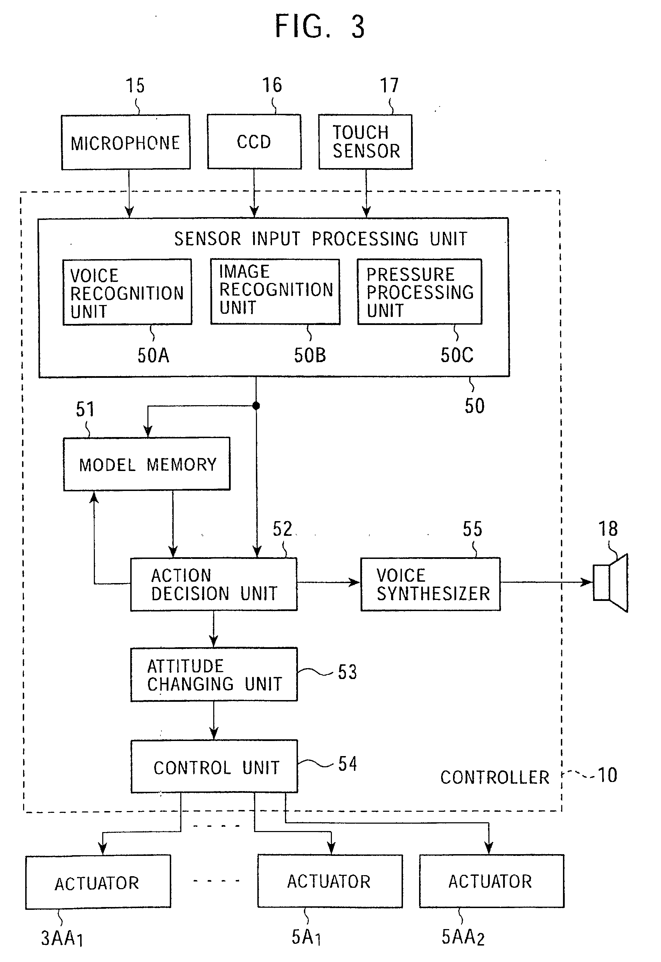

Fig. 3 shows the functional structure of the controller 10 shown in Fig. 2. Note that the functional structure shown in Fig. 3 is realized by executing, using the CPU 10A, the control program stored in the memory 10B.

The controller 10 includes a sensor input processing unit 50 for detecting a specific external state, a model memory 51 for storing detection results given by the sensor input processing unit 50 and for representing a state associated with emotion, instinct, or a growth, an action decision unit 52 for determining how to act next on the basis of the result of the detection performed by the sensor input processing unit 50, an attitude changing unit 53 for making the robot actually take an action in accordance with a decision made by the action decision unit 52, a control unit 54 for driving actuators 3AA₁ to 5A₁ and 5A₂, and a voice synthesis unit 55 for producing synthesized voice.

The sensor input processing unit 50 detects specific external conditions, an action of a user applied to the robot, and a command given by the user, on the basis of the voice signal, the image signal, and the pressure signal supplied from the microphone 15, the CCD camera 16, and the touch sensor 17, respectively. Information indicating the detected conditions is supplied as recognized-state information to the model memory 51 and the action decision unit 52.

The sensor input processing unit 50 also includes a voice recognition unit 50A for recognizing the voice signal supplied from the microphone 15. For example, if a given voice signal is recognized by the voice recognition unit 50A as a command such as "walk", "lie down", or "follow the ball", the recognized command is supplied as recognized-state information from the voice recognition unit 50A is supplied as recognized-state information to the model memory 51 and the action decision unit 52.

The sensor input processing unit 50 also includes an image recognition unit 50B for recognizing an image signal supplied from the CCD camera 16. For example, if the image recognition unit 50B detects, via the image recognition, "something red and round" or a "plane extending vertical from the ground to a height greater than a predetermined value", then the image recognition unit 50B supplies information indicating the state of the environment such as "there is a ball" or "there is a wall" as recognized-state information to the model memory 51 and the action decision unit 52.

The sensor input processing unit 50 further includes a pressure processing unit 50C for processing a detected pressure signal supplied from the touch sensor 17. For example, if the pressure processing unit 50C detects a pressure higher than a predetermined threshold for a short duration, the pressure processing unit 50C recognizes that the robot has been "tapped (scolded)". In a case in which the detected pressure is lower in magnitude than a predetermined threshold and long in duration, the pressure processing unit 50C recognizes that that the robot has been "rubbed (praised)". Information indicating the result of recognition is supplied as recognized-state information to the model memory 51 and the action decision unit 52.

The model memory 51 stores and manages an emotion model, an instinct model, and a growth model representing the states of the robot concerning emotion, instinct, and growth, respectively.

The emotion model represents the state (degree) of emotion concerning, for example, "happiness", "sadness", "angriness", and "pleasure" using values within predetermined ranges (for example, from -1.0 to 1.0),
wherein the values are varied depending on the recognized-state information supplied from the sensor input processing unit 50 and depending on the passage of time. The instinct model represents the state (degree) of instinct concerning, for example, "appetite", "desire for sleep", and "desire for exercise" using values within predetermined ranges, wherein the values are varied depending on the recognized-state information supplied from the sensor input processing unit 50 and depending on the passage of time. The growth model represents the state (degree) of growth, such as "childhood", "youth", "middle age" and "old age" using values within predetermined ranges, wherein the values are varied depending on the recognized-state information supplied from the sensor input processing unit 50 and depending on the passage of time.

The states of emotion, instinct, and growth, represented by values of the emotion model, the instinct model, and the growth model, respectively, are supplied as state information from the model memory 51 to the action decision unit 52.

In addition to the recognized-state information supplied from the sensor input processing unit 50, the model memory 51 also receives, from the action decision unit 52, action information indicating a current or past action of the robot, such as "walked for a long time", thereby allowing the model memory 51 to produce different state information for the same recognized-state information, depending on the robot's action indicated by the action information.

More specifically, for example, when the robot greets the user, if the user rubs the head of the robot, then action information indicating that the robot greeted the user and recognized-state information indicating that the head was rubbed are supplied to the model memory 51. In this case, the model memory 51 increases the value of the emotion model indicating the degree of happiness.

On the other hand, if the robot is rubbed on the head when the robot is doing a job, action information indicating that the robot is doing a job and recognized-state information indicating that the head was rubbed are supplied to the model memory 51. In this case, the model memory 51 does not increase the value of the emotion model indicating the degree of "happiness".

As described above, the model memory 51 sets the values of the emotion model on the basis of not only the recognized-state information but also the action information indicating the current or past action of the robot. This prevents the robot from having an unnatural change in emotion. For example, even if the user rubs the head of the robot with intension of playing a trick on the robot when the robot is doing some task, the value of the emotion model associated with "happiness" is not increased unnaturally.

For the instinct model and the growth model, the model memory 51 also increases or decreases the values on the basis of both the recognized-state information and the action information, as with the emotion model. Furthermore, when the model memory 51 increases or decreases a value of one of the emotion model, the instinct model, and the growth model, the values of the other models are taken into account.

The action decision unit 52 decides an action to be taken next on the basis of the recognized-state information supplied from the sensor input processing unit 50, the state information supplied from the model memory 51, and the passage of time. The content of the decided action is supplied as action command information to the attitude changing unit 53.

More specifically, the action decision unit 52 manages a finite automaton, which can take states corresponding to the possible actions of the robot, as an action model which determines the action of the robot such that the state of the finite automaton serving as the action model is changed depending on the recognized-state information supplied from the sensor input processing unit 50, the values of the model memory 51 associated with the emotion model, the instinct model, and the growth model, and the passage of time, and the action decision unit 52 employs the action corresponding to the changed state as the action to be taken next.

In the above process, when the action decision unit 52 detects a particular trigger, the action decision unit 52 changes the state. More specifically, the action decision unit 52 changes the state, for example, when the period of time in which the action corresponding to the current state has been performed has reached a predetermined value, or when specific recognized-state information has been received, or when the value of the state of the emotion, instinct, or growth indicated by the state information supplied from the model memory 51 becomes lower or higher than a predetermined threshold.

Because, as described above, the action decision unit 52 changes the state of the action model not only depending on the recognized-state information supplied from the sensor input processing unit 50 but also depending on the values of the emotion model, the instinct model, and the growth model of the model memory 51, the state to which the current state is changed can be different depending on the values (state information) of the emotion model, the instinct model, and the growth model even when the same recognized-state information is input.

For example, when the state information indicates that the robot is not "angry" and is not "hungry", if the recognized-state information indicates that "a user's hand with its palm facing up is held in front of the face of the robot", the action decision unit 52 produces, in response to the hand being held in front of the face of the robot, action command information indicating that "shaking" should be performed and the action decision unit 52 transmits the produced action command information to the attitude changing unit 53.

On the other hand, for example, when the state information indicates that the robot is not "angry" but "hungry", if the recognized-state information indicates that "a user's hand with its palm facing up is held in front of the face of the robot", the action decision unit 52 produces, in response to the hand being held in front of the face of the robot, action command information indicating that the robot should "lick the palm of the hand" and the action decision unit 52 transmits the produced action command information to the attitude changing unit 53.

When the state information indicates that the robot is angry, if the recognized-state information indicates that "a user's hand with its palm facing up is held in front of the face of the robot", the action decision unit 52 produces action command information indicating that the robot should "turn its face aside" regardless of whether the state information indicates that the robot is or is not "hungry", and the action decision unit 52 transmits the produced action command information to the attitude changing unit 53.

In addition to above-described action command information associated with motions of various parts of the robot such as the head, hand, legs, etc., the action decision unit 52 also produces action command information for causing the robot to utter. The action command information for causing the robot to utter is supplied to the voice synthesis unit 55. The action command information supplied to the voice synthesis unit 55 includes a text (or a sequence of phonetic symbols including phonemic information) according to which a voice is to be synthesized by the voice synthesis unit 55. If the voice synthesis unit 55 receives the action command information from the action decision unit 52, the voice synthesis unit 55 produces a synthesized voice in accordance with the text included in the action command information and supplies it to the speaker 18, which in turns outputs the synthesized voice. Thus, for example, the speaker 18 outputs a voice of a cry, a voice "I am hungry" to request the user for something, or a voice "What?" to respond to a call from the user. When synthesized voice is output from the voice synthesis unit 55, the action decision unit 52 produces action command information to open and close the lower jaw unit 4A, as required, and transmits the resultant action command information to the attitude changing unit 53. Opening and closing of the lower jaw 4A in synchronization with outputting of the synthesized voice can give the user an impression that the robot is actually speaking.

In accordance with the action command information supplied from the action decision unit 52, the attitude changing unit 53 produces attitude change command information for changing the attitude of the robot from the current attitude to a next attitude and transmits it to the control unit 54.

In accordance with the attitude change command information received from the attitude changing unit 53, the control unit 54 produces a control signal for driving the actuators 3AA₁ to 5A₁ and 5A₂ and transmits it to the actuators 3AA₁ to 5A₁ and 5A₂. Thus, in accordance with the control signal, the actuators 3AA₁ to 5A₁ and 5A₂ are driven such that the robot acts autonomously.

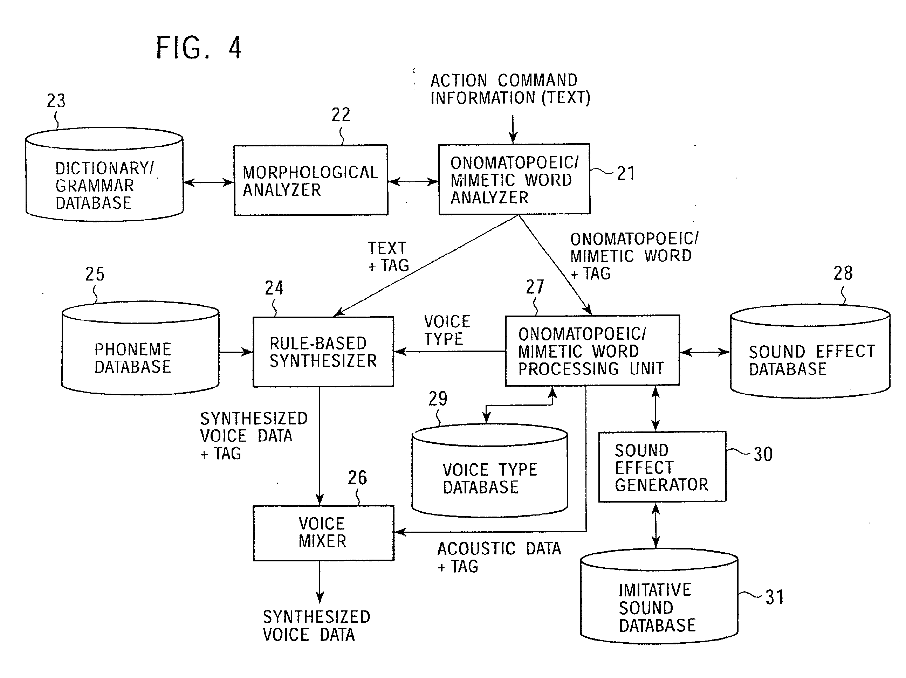

Fig. 4 shows an example of a construction of the voice synthesis unit 55 shown in Fig. 3.

Action command information including a text, according to which a voice is to be synthesized, is supplied from the action decision unit 52 to an onomatopoeic/mimetic word analyzer 21. The onomatopoeic/mimetic word analyzer 21 analyzes the text included in the action command information to determine whether the text includes an onomatopoeia or a mimetic word. If the text includes an onomatopoeia or a mimetic word, the onomatopoeic/mimetic word analyzer 21 extracts the onomatopoeia or the mimetic word from the text. More specifically, the onomatopoeic/mimetic word analyzer 21 supplies the text included in the action command information to a morphological analyzer 22, which performs a morphological analysis on the received text. In accordance with the result of the morphological analysis, the onomatopoeic/mimetic word analyzer 21 extracts the onomatopoeia or the mimetic word included in the text.

The onomatopoeic/mimetic word analyzer 21 adds (inserts) a tag identifying the onomatopoeia or the mimetic word included in the text (hereinafter, such a tag will be referred to simply as an identification tag) to (into) the text, and the onomatopoeic/mimetic word analyzer 21 supplies the resultant text to a rule-based synthesizer 24. The onomatopoeic/mimetic word analyzer 21 also supplies data indicating the onomatopoeia or the mimetic word with the identification tag to an onomatopoeic/mimetic word processing unit 27.

Upon receiving the text from the onomatopoeic/mimetic word analyzer 21, the morphological analyzer 22 analyzes morphologically the given text while referring to a dictionary/grammar database 23.

The dictionary/grammar database 23 includes a word dictionary in which a part of speech, a pronunciation, an accent, and other information are described for each word and also includes data representing grammatical rules, such as restrictions on word concatenations, for the words described in the word dictionary. In accordance with the word dictionary and the grammatical rules, the morphological analyzer 22 performs morphological analysis (and further syntax analysis or the like, if necessary) on the text received from the onomatopoeic/mimetic word analyzer 21 and supplies the result of the morphological analysis to the onomatopoeic/mimetic word analyzer 21.

The result of the morphological analysis of the text, performed by the morphological analyzer 22, can be referred to not only by the onomatopoeic/mimetic word analyzer 21 but also by other blocks when necessary.

The rule-based synthesizer 24 performs natural language processing on a rule basis. More specifically, the rule-based synthesizer 24 first extracts information necessary in performing rule-based voice synthesis on the text supplied from the onomatopoeic/mimetic word analyzer 21, in accordance with the result of the morphological analysis performed by the morphological analyzer 22. The information necessary in the rule-based voice synthesis includes, for example, information for controlling an accent, an intonation, and the location of a pause, prosodic information, and phonemic information such as a pronunciation of each word.

The rule-based synthesizer 24 refers to a phoneme database 25 and produces voice data (digital data) of a synthesized voice corresponding to the text received from the onomatopoeic/mimetic word analyzer 21.

The phoneme database 25 stores phoneme data in the form of, for example, CV (Consonant, Vowel), VCV, or CVC. In accordance with the acquired prosodic information or phonemic information, the rule-based synthesizer 24 concatenates necessary phoneme data and further sets a pattern (pitch pattern) indicating a time-dependent change in pitch frequency and a pattern (power pattern) indicating a time-dependent change in power so that a pause, an accent, and an intonation are properly added to the concatenated phoneme data, thereby producing synthesized voice data corresponding to the text received from the onomatopoeic/mimetic word analyzer 21.

In the above process, the rule-based synthesizer 24 selects a default voice type unless a specific voice type is specified by the onomatopoeic/mimetic word processing unit 27, and the rule-based synthesizer 24 produces the synthesized voice data so as to have tone or a prosodic characteristic corresponding to the default voice type. However, in a case in which a specific voice type is specified by the onomatopoeic/mimetic word processing unit 27, the rule-based synthesizer 24 sets, depending on the specified voice type, synthesis parameters (parameters used to control the prosodic characteristic or the tone) to be used in the rule-based voice synthesis and produces the synthesized voice data in accordance with the synthesis parameters.

More specifically, in accordance with the selected voice type, the rule-based synthesizer 24 changes the frequency characteristic of the phoneme data used in the production of the synthesized voice data, by applying, for example, high frequency emphasis, low frequency emphasis, or equalization to the phoneme data. The rule-based synthesizer 24 then concatenates the phoneme data whose frequency characteristic has been changed, thereby producing the synthesized voice data. This allows the rule-based synthesizer 24 to produce synthesized voice data having various voice types such as synthesized voice data of a male voice, female voice, or a child voice, or synthesized voice data having a happy or sad tone. The rule-based synthesizer 24 also determines a pitch pattern or a power pattern in accordance with the selected voice type and produces synthesized voice data having the determined pitch pattern or power pattern.

The synthesized voice data produced by the rule-based synthesizer 24 is supplied to a voice mixer 26. When the rule-based synthesizer 24 produces synthesized voice data corresponding to a text including an identification tag supplied from the onomatopoeic/mimetic word analyzer 21, the produced synthesized voice data includes the identification tag included in the text. That is, the synthesized voice data supplied from the rule-based synthesizer 24 to the voice mixer 26 includes the identification tag. As described earlier, the identification tag identifies an onomatopoeia or a mimetic word. That is, the tag indicates a portion corresponding to the onomatopoeia or the mimetic word in the synthesized voice data in the form of waveform data.

In addition to the synthesized voice data from the rule-based synthesizer 24, acoustic data indicating a sound effect is supplied, as required, to the voice mixer 26 from the onomatopoeic/mimetic word processing unit 27. The voice mixer 26 mixes the synthesized voice data and the acoustic data thereby producing and outputting final synthesized voice data.

The acoustic data indicating the sound effect supplied from the onomatopoeic/mimetic word processing unit 27 to the voice mixer 26 corresponds to the onomatopoeia or the mimetic word extracted from the text corresponding to the synthesized voice data output from the rule-based synthesizer 24, and the voice mixer 26 superimposes the acoustic data on the whole or part of the synthesized voice data or replaces the a portion, corresponding to the onomatopoeia or the mimetic word, of the synthesized voice data with the acoustic data.

The onomatopoeic/mimetic word processing unit 27 processes the onomatopoeia or the mimetic word supplied from the onomatopoeic/mimetic word analyzer 21.

That is, the onomatopoeic/mimetic word processing unit 27 produces acoustic data corresponding to the sound effect corresponding to the onomatopoeia or the mimetic word and supplies the resultant acoustic data to the voice mixer 26.

More specifically, the onomatopoeic/mimetic word processing unit 27 accesses, for example, a sound effect database 28 to read acoustic data of the sound effect corresponding to the onomatopoeia or the mimetic word supplied from the onomatopoeic/mimetic word analyzer 21.

That is, the sound effect database 28 stores onomatopoeias or mimetic words and corresponding acoustic data of sound effects representing the onomatopoeias or mimetic words, and the onomatopoeic/mimetic word processing unit 27 accesses the sound effect database 28 to read acoustic data of the sound effect corresponding to the onomatopoeia or the mimetic word supplied from the onomatopoeic/mimetic word analyzer 21.

Alternatively, the onomatopoeic/mimetic word processing unit 27 may control the sound effect generator 30 so as to produce acoustic data representing a sound effect imitating the onomatopoeia or the mimetic word supplied from the onomatopoeic/mimetic word analyzer 21.

The acoustic data produced by the onomatopoeic/mimetic word processing unit 27 in the above-described manner is supplied to the voice mixer 26 together with the identification tag added with the onomatopoeia or the mimetic word supplied from the onomatopoeic/mimetic word analyzer 21.

In addition to the production of the acoustic data corresponding to the onomatopoeia or the mimetic word, the onomatopoeic/mimetic word processing unit 27 determines the voice type of the synthesized voice produced by the rule-based synthesizer 24, by referring to a voice type database 29, and commands the rule-based synthesizer 24 to produce the synthesized voice in accordance with the voice type.

That is, the voice type database 29 stores onomatopoeias or mimetic words and corresponding voice types of synthesized voice which well reflect the meanings of the onomatopoeias or mimetic words. The onomatopoeic/mimetic word processing unit 27 access the voice type database 29 to read a voice type corresponding to the onomatopoeia or the mimetic word supplied from the onomatopoeic/mimetic word analyzer 21 and supplies the resultant voice type to the rule-based synthesizer 24.

For example, in the case of a text "My heart is pounding with anticipation." including a mimetic word "pound", the mimetic word "pound" represents being happy or glad, and thus, in the voice type database 29, a voice type with a cheerful tone (for example, having emphasized highfrequency components and having emphasized intonation) is assigned to the mimetic word "pound".

Under the control of the onomatopoeic/mimetic word processing unit 27, a sound effect generator 30 generates sound-effect acoustic data representing an imitative sound of the onomatopoeia or the mimetic word by referring to a imitative sound database 31.

That is, the imitative sound database 31 stores onomatopoeias or mimetic words or character strings including parts of onomatopoeias or mimetic words and corresponding sound effect information used to produce sound effects. The sound effect generator 30 reads, from the imitative sound database 31, sound effect information corresponding to a character string indicating the whole or part of the onomatopoeia or the mimetic word output from the onomatopoeic/mimetic word analyzer 21. In accordance with the sound effect information, the sound effect generator 30 generates acoustic data of a sound effect imitatively representing the onomatopoeia or the mimetic word output from the onomatopoeic/mimetic word analyzer 21 and supplies. the resultant acoustic data to the onomatopoeic/mimetic word processing unit 27.

The voice synthesis unit 55 constructed in the above-described manner performs a preprocess for extracting an onomatopoeia or a mimetic word from a text included in action command information supplied from the action decision unit 52 (Fig. 3) and an onomatopoeic/mimetic word process for processing the onomatopoeia or the mimetic word extracted from the text, and then produces a synthesized voice corresponding to the text included in the action command information in accordance with the result of the onomatopoeic/mimetic word process.

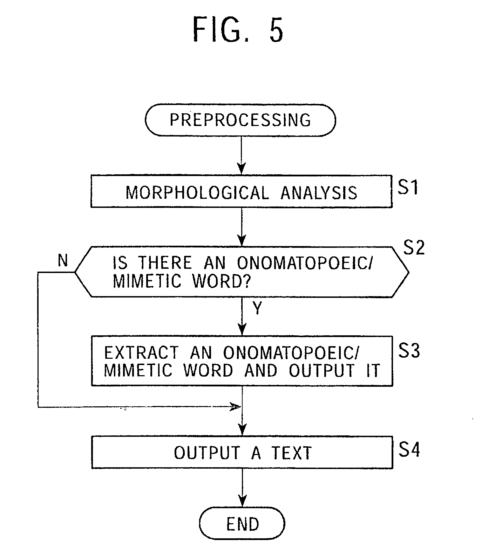

Referring to a flow chart shown in Fig. 5, the preprocess is described.

If action command information including a text, in accordance with which a synthesized voice is to be produced, is supplied from the action decision unit 52 (Fig. 3) to the onomatopoeic/mimetic word analyzer 21, the onomatopoeic/mimetic word analyzer 21 supplies the text included in the action command information received from the action decision unit 52 to the morphological analyzer 22 and requests the morphological analyzer 22 to perform morphological analysis.

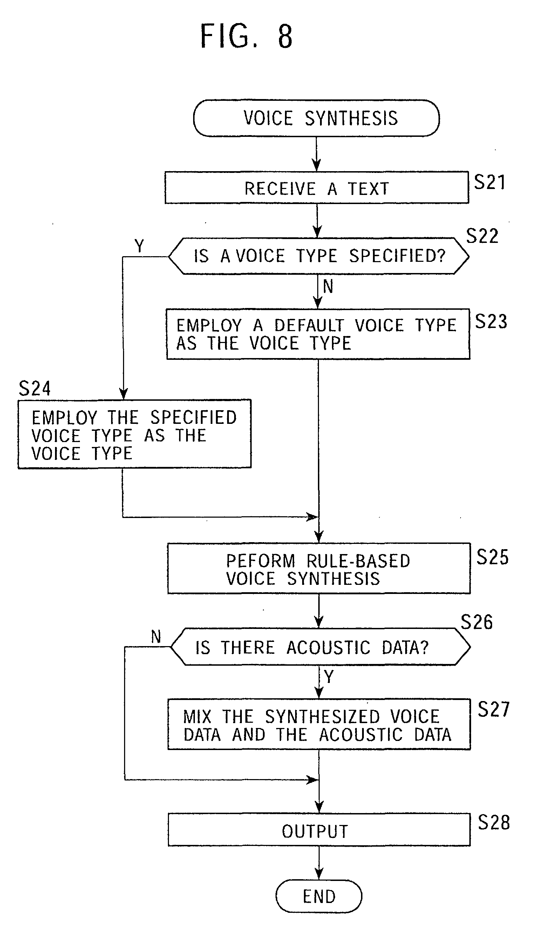

Thus, in step S1, the morphological analyzer 22 performs morphological analysis on the text supplied from the onomatopoeic/mimetic word analyzer 21 and supplies the result of the morphological analysis to the onomatopoeic/mimetic word analyzer 21. If the onomatopoeic/mimetic word analyzer 21 receives the result of the morphological analysis from the morphological analyzer 22, then, in step S2, the onomatopoeic/mimetic word analyzer 21 determines, on the basis of the result of the morphological analysis, whether the text includes an onomatopoeia or a mimetic word. If it is determined in step S2 that the text includes neither an onomatopoeia nor a mimetic word, the process jumps to step S4 without performing step S3. In step S4, the onomatopoeic/mimetic word analyzer 21 directly outputs the text included in the action command information to the rule-based synthesizer 24, and the preprocess is ended. In this case, in the voice synthesis process (Fig. 8) performed later, a synthesized voice corresponding to the text is produced in a similar manner as in the conventional technique.

In a case in which it is determined in step S2 that the text includes an onomatopoeia or a mimetic word, the process proceeds to step S3. In step S3, the onomatopoeic/mimetic word analyzer 21 extracts the onomatopoeia or the mimetic word from the text and adds an identification tag thereto. The extracted onomatopoeia or the mimetic word with the added identification tag is output to the onomatopoeic/mimetic word processing unit 27.

Then in the next step S4, the onomatopoeic/mimetic word analyzer 21 adds the identification tag to the text so that the onomatopoeia or the mimetic word can be distinguished. The resultant text added with the tag is supplied to the rule-based synthesizer 24, and the preprocess is ended.

In the preprocess described above, if the action command information includes, for example, a text "Pour beer into a glass brimmingly.", the onomatopoeic/mimetic word analyzer 21 extracts a mimetic word "brimmingly" and supplies the mimetic word added with the identification tag "<Pmix1>brimmingly" to the onomatopoeic/mimetic word processing unit 27. Furthermore, the onomatopoeic/mimetic word analyzer 21 supplies the text added with the identification tag "Pour beer into a glass <Pmix1>brimmingly</Pmix1>." to the rule-based synthesizer 24.

In the above text, the parts enclosed between "<" and ">" are the identification tags. In the identification tag <Pmix1>, P at the beginning indicates that the onomatopoeia or the mimetic word influences the synthesized voice data corresponding to the text only within a limited scope corresponding to the part of the onomatopoeia or the mimetic word. That is, in the case in which the identification tag starts with P, the voice mixer 26 mixes the synthesized voice data and the acoustic data such that the acoustic data of the sound effect corresponding to the onomatopoeia or the mimetic word is reflected only in the part, corresponding to the onomatopoeia or the mimetic word, of the synthesized voice data corresponding to the text.

When it is desired that an onomatopoeia or a mimetic word have an influence over the whole synthesized voice data corresponding to a text, for example, S is placed at the beginning of an identification tag. Thus, in a case in which an identification tag is given as, for example, <Smix1>, the voice mixer 26 superimposes acoustic data of a sound effect corresponding to an onomatopoeia or a mimetic word included in a text on the entire synthesized voice data corresponding to the text.

In the identification tag <Pmix1>, mix following P indicates that the voice mixer 26 should superimpose the acoustic data of the sound effect corresponding to the onomatopoeia or the mimetic word included in the text on the synthesized voice data corresponding to the text. Depending on the situation, the voice mixer 26 may replace a part, corresponding to an onomatopoeia or a mimetic word, of synthesized voice data corresponding to a text with acoustic data of a sound effect corresponding to the onomatopoeia or the mimetic word. In this case, mix in the identification tag is replaced with rep. That is, when an identification tag is given, for example, as <Prep1>, the voice mixer 26 replaces a part, corresponding to an onomatopoeia or a mimetic word, of synthesized voice data corresponding to a text with acoustic data of a sound effect corresponding to the onomatopoeia or the mimetic word.

In the identification tag <Pmix1>, a numeral 1 located at the end denotes a number uniquely assigned to the onomatopoeia or the mimetic word added with the identification tag. The numbers starting from 1 are sequentially assigned to respective onomatopoeias or mimetic words included in the text. That is, if a text includes a plurality of onomatopoeias or mimetic words, identification tags having sequentially increasing numerals such as <Pmix1>, <Pmix2>,..., and so on are assigned to the respective onomatopoeias or mimetic words starting from the a first onomatopoeia or mimetic word.

In addition to the identification tag <Pmix1> indicating the starting position of an onomatopoeia or a mimetic word, the onomatopoeic/mimetic word analyzer 21 also adds an identification tag </Pmix1>, which is similar to the identification tag <Pmix1> except that "/" is placed at the beginning, to the text to indicate the end position of the onomatopoeia or the mimetic word.

For example, when action command information includes a text "My heart is pounding with gladness." including a mimetic word "pound", the onomatopoeic/mimetic word analyzer 21 extracts the mimetic word "pound". In this case, if it is desired that the voice mixer 26 should superimpose acoustic data of a sound effect corresponding to the onomatopoeia or the mimetic word only on a part, corresponding to the onomatopoeia or the mimetic word, of the text, the onomatopoeic/mimetic word analyzer 21 produces a mimetic word added with a tag "<Pmix1>pounding", in which P indicates that the acoustic data of the sound effect corresponding to the onomatopoeia or the mimetic word should be reflected only in the part, corresponding to the onomatopoeia or the mimetic word, of the synthesized voice data and mix indicates that the acoustic data should be superimposed on the synthesized voice data, and the resultant mimetic word with the tag is supplied to the onomatopoeic/mimetic word processing unit 27. Furthermore, the onomatopoeic/mimetic word analyzer 21 puts identification tags <Pmix1> and </Pmix1> at the starting position and the end position, respectively, of the mimetic word "pounding" in the text "My heart is pounding with gladness.", thereby producing a text "My heart is <Pmix1>pounding</Pmix1> with gladness.", and supplies the resultant text with tags to the rule-based synthesizer 24.

By way of another example, if action command information includes a text "He clapped his hands: clap, clap, clap", the onomatopoeic/mimetic word analyzer 21 extracts an onomatopoeia "clap, clap, clap". In this case, if it is desired that the voice mixer 26 should replace only the part, corresponding to the onomatopoeia or the mimetic word, of the synthesized voice data corresponding to the text with acoustic data of a sound effect corresponding to the onomatopoeia or the mimetic word, the onomatopoeic/mimetic word analyzer 21 produces an onomatopoeia added with an identification tag <Prep1> "<Prep1>clap, clap, clap" in which P indicates that the acoustic data of the sound effect corresponding to the onomatopoeia or the mimetic word should be reflected only in the part, corresponding to the onomatopoeia or the mimetic word, of the synthesized voice data and rep indicates that the part, corresponding to the onomatopoeia or the mimetic word, of the synthesized voice data should be replaced with the acoustic data of the sound effect corresponding go the onomatopoeia "clap, clap, clap", and the resultant onomatopoeia added with the identification tag is supplied to the onomatopoeic/mimetic word processing unit 27. Furthermore, the onomatopoeic/mimetic word analyzer 21 puts identification tags <Prep1> and </Prep1> at the starting position and the end position, respectively, of the onomatopoeia "clap, clap, clap" in the text "He clapped his hands: clap, clap, clap", thereby producing a text "He clapped his hands: <Prep1>clap, clap, clap</Prep1>", and supplies the resultant text to the rule-based synthesizer 24.

Information indicating whether the acoustic data of the sound effect corresponding to the onomatopoeia should be reflected only in the part, corresponding to the onomatopoeia, of the synthesized voice data or in the entire synthesized voice data may be set in advance or may be described in the action command information supplied from the action decision unit 52. The decision on whether the acoustic data of the sound effect corresponding to the onomatopoeia should be reflected only in the part, corresponding to the onomatopoeia, of the synthesized voice data or in the entire synthesized voice data may be made by a user or may be made in accordance with words lying before or after the onomatopoeia. The decision on whether the acoustic data should be superimposed on the synthesized voice data or a part of the synthesized voice data should be replaced with the acoustic data may also be made in a similar manner.

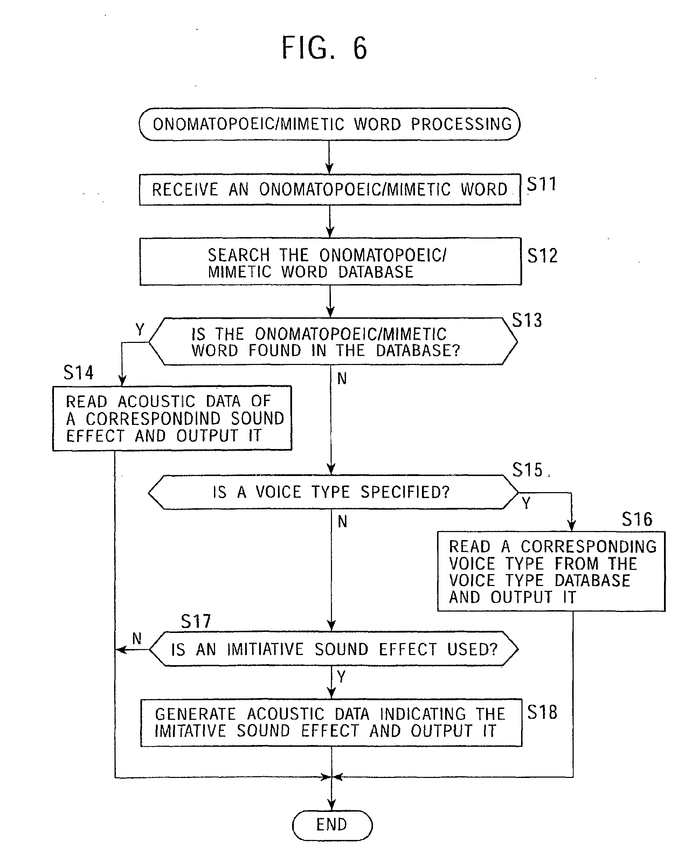

Now, the onomatopoeic/mimetic word process is described with reference to a flow chart shown in Fig. 6.

The onomatopoeic/mimetic word process starts when the onomatopoeic/mimetic word processing unit 27 receives an onomatopoeia or a mimetic word added with an identification tag from the onomatopoeic/mimetic word analyzer 21. That is, in first step S11, the onomatopoeic/mimetic word processing unit 27 receives an onomatopoeia or a mimetic word added with an identification tag from the onomatopoeic/mimetic word analyzer 21. Thereafter, the process proceeds to step S12.

In step S12, the onomatopoeic/mimetic word processing unit 27 searches the sound effect database 28. In the next step S13, it is determined whether the onomatopoeic/mimetic word processing unit 27 has found, in the retrieval of the sound effect database 28 in step S12, the onomatopoeia or the mimetic word received in step S11 from the onomatopoeic/mimetic word analyzer 21, that is, it is determined whether the onomatopoeia or the mimetic word received from the onomatopoeic/mimetic word analyzer 21 is included in the sound effect database 28.

If it is determined in step S13 that the onomatopoeia or the mimetic word received from the onomatopoeic/mimetic word analyzer 21 is included in the sound effect database 28, the process proceeds to step S14. In step S14, the onomatopoeic/mimetic word processing unit 27 reads, from the sound effect database 28, acoustic data of a sound effect corresponding to the onomatopoeia or the mimetic word received from the onomatopoeic/mimetic word analyzer 21 and adds the identification tag, added to onomatopoeia or the mimetic word received from the onomatopoeic/mimetic word analyzer 21, to the acoustic data read from the sound effect database 28. The onomatopoeic/mimetic word processing unit 27 outputs the resultant acoustic data added with the identification tag to the voice mixer 26 and ends the onomatopoeic/mimetic word process.

For example, when the sound effect database 28 includes a mimetic word "brimmingly" and acoustic data of a sound effect "gurgle, gurgle" which are related to each other, if the mimetic word "brimmingly" added with an identification tag is supplied from the onomatopoeic/mimetic word analyzer 21 to the onomatopoeic/mimetic word processing unit 27, the onomatopoeic/mimetic word processing unit 27 reads the acoustic data of the sound effect "gurgle, gurgle" corresponding to the mimetic word "brimmingly" from the sound effect database 28 and supplies the acquired acoustic data together with the identification tag added with the mimetic word "brimmingly" to the voice mixer 26.

On the other hand, if it is determined in step S13 that the onomatopoeia or the mimetic word received from the onomatopoeic/mimetic word analyzer 21 (hereinafter, such an onomatopoeia or a mimetic word will be referred to as an onomatopoeic/mimetic word of interest) is not included in the sound effect database 28, the process jumps to step S15. In step S15, the onomatopoeic/mimetic word processing unit 27 determines whether a voice type of synthesized voice data should be specified.

Information indicating whether the voice type of synthesized voice data should be specified may be set in advance by a user or may be described in the action command information so that the decision in step S13 is made in accordance with the information.

If it is determined in step S15 that the voice type of the synthesized voice data should be specified, the process proceeds to step S16. In step S16, the onomatopoeic/mimetic word processing unit 27 access the voice type database 29 to read a voice type related to the onomatopoeic/mimetic word of interest. The onomatopoeic/mimetic word processing unit 27 supplies a command signal, indicating that the synthesized voice data should be produced according to the specified voice type, to the rule-based synthesizer 24 together with data indicating the voice type. Thereafter, the onomatopoeic/mimetic word process is ended.

Thus, for example, in a case in which, in the voice type database 29, a voice type with an emphasized intonation is assigned to the mimetic word "pound", if the mimetic word "pound" added with an identification tag is supplied from the onomatopoeic/mimetic word analyzer 21 to the onomatopoeic/mimetic word processing unit 27, the onomatopoeic/mimetic word processing unit 27 reads the voice type with an emphasized intonation related to the mimetic word "pound" from the voice type database 29 and supplies a command signal indicating the voice type to the rule-based synthesizer 24.

In a case in which the voice type database 29 does not include a voice type corresponding to the onomatopoeic/mimetic word of interest, the onomatopoeic/mimetic word processing unit 27 supplies a command signal indicating, for example, a default voice type, to the rule-based synthesizer 24.

On the other hand, if it is determined in step S15 that specifying of the voice type of the synthesized voice data is not necessary, the process jumps to step S17. In step S17, the onomatopoeic/mimetic word processing unit 27 determines whether to use a sound effect generated so as to imitate the onomatopoeic/mimetic word of interest (hereinafter, such a sound effect will be referred to as an imitative sound effect) as the sound effect for the onomatopoeic/mimetic word of interest.

Information indicating whether to use the imitative sound effect as the sound effect for the onomatopoeic/mimetic word of interest may be set in advance or may be described in the action command information, as with the information indicating whether to specify the voice type of the synthesized voice data, so that the decision in step S17 is made in accordance with the information.

If it is determined in step S17 that the imitative sound effect is used as the sound effect for the onomatopoeic/mimetic word of interest, the process proceeds to step S18. In step S18, the onomatopoeic/mimetic word processing unit 27 controls the sound effect generator 30 so as to produce the acoustic data of the imitative sound effect for the onomatopoeic/mimetic word of interest.

More specifically, in this case, the sound effect generator 30 produces the acoustic data of the imitative sound effect for the onomatopoeic/mimetic word of interest by referring to the imitative sound database 31.

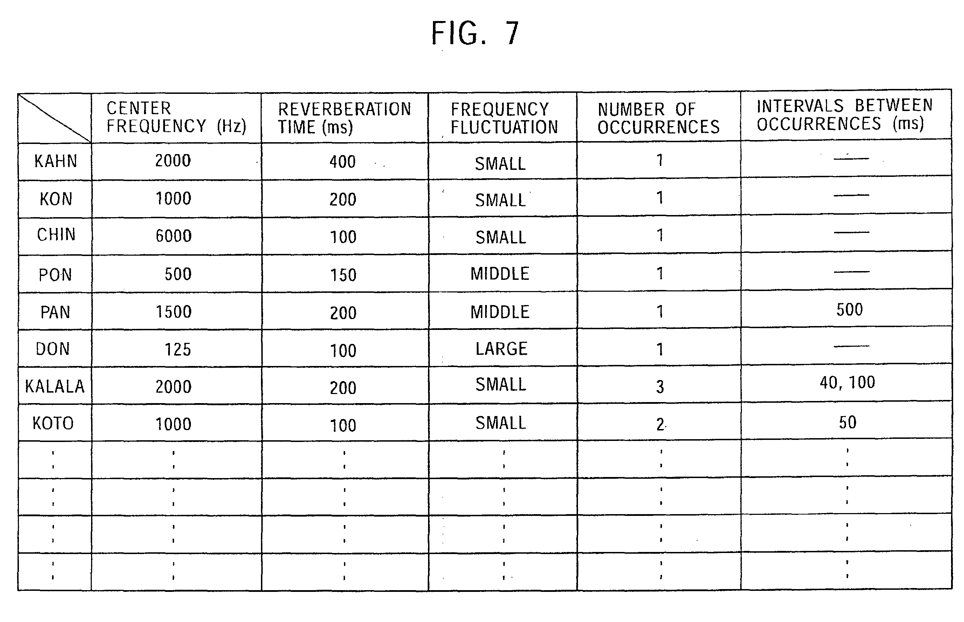

As shown in Fig. 7, the imitative sound database 31 stores character strings indicating the whole or part of respective onomatopoeias or mimetic words and sound effect information related thereto for producing imitative sound effects. In the specific example shown in Fig. 7, the sound effect information used to produce each imitative sound effect includes the central frequency of the imitative sound effect, the reverberation time, the frequency fluctuation, the number of occurrences, and the intervals between occurrences.

For example, in a case in which an onomatopoeia "clap, clap, clap" added with an identification tag is supplied from the onomatopoeic/mimetic word analyzer 21 to the onomatopoeic/mimetic word processing unit 27, the sound effect generator 30 recognizes, from the sound effect information related to a character string "clap" which is a part of the onomatopoeia "clap, clap, clap" described in the imitative sound database 30, that the central frequency is "1500 Hz", the reverberation time is "200 ms", the frequency fluctuation is "middle", the number of occurrences is "1", and the intervals between occurrences is "500 ms". In accordance with the acquired sound effect information, the sound effect generator 30 produces acoustic data representing an impulsive attenuating sound to be employed as the imitative sound effect for the onomatopoeia "clap, clap, clap" and supplies the resultant acoustic data to the onomatopoeic/mimetic word processing unit 27. Acoustic data of imitative sounds may be produced using, for example, sinusoidal waves.

If the onomatopoeic/mimetic word processing unit 27 receives the acoustic data of the imitative sound from the sound effect generator 30, the onomatopoeic/mimetic word processing unit 27 adds the identification tag, added with the onomatopoeic/mimetic word of interest, to the acoustic data and outputs the acoustic data added with the identification tag to the voice mixer 26. Thereafter, the onomatopoeic/mimetic word process is ended.

The voice synthesis process is described below with reference to a flow chart shown in Fig. 8.

The voice synthesis process starts when the onomatopoeic/mimetic word analyzer 21 transmits a text to the rule-based synthesizer 24. In the first step S21, the rule-based synthesizer 24 receives a text transmitted from the onomatopoeic/mimetic word analyzer 21. Thereafter, the process proceeds to step S22.

In step S22, the rule-based synthesizer 24 determines whether a command signal specifying the voice type has been received from the onomatopoeic/mimetic word processing unit 27, that is, whether the voice type has been specified.

If it is determined in step S22 that the voice type is not specified, the process proceeds to step S23. In step S23, the rule-based synthesizer 24 selects a default voice type. Thereafter, the process proceeds to step S25.

On the other hand, in a case in which it is determined in step S22 that the voice type is specified, the process proceeds to step S24. In step S24, the rule-based synthesizer 24 selects the specified voice type as the voice type to be used. Thereafter, the process proceeds to step S25.

In step S25, the rule-based synthesizer 24 performs rule-based voice synthesis to produce synthesized voice data corresponding to the text received from the onomatopoeic/mimetic word analyzer 21 such that the synthesized voice data has a tone or a prosodic characteristic corresponding to the voice type selected in step S23 or S24.

For example, in a case in which a text "Pour beer into a glass <Pmix1>brimmingly</Pmix1>." is supplied from the onomatopoeic/mimetic word analyzer 21 to the rule-based synthesizer 24, the rule-based synthesizer 24 produces voice data corresponding to phonemic information "po:r bí 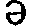 r intu a gl 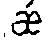 s <Pmix1>brimiηgli</Pmix1>", where: indicates a long sound and ' indicates the position of an accent. The rule-based synthesizer 24 produces synthesized voice data such that the part corresponding to the onomatopoeia or the mimetic word can be distinguished by the identification tags.

For example, in a case in which a text "My heart is <Pmix1>pounding</Pmix1> with gladness." is supplied from the onomatopoeic/mimetic word analyzer 21 to the rule-based synthesizer 24, if voice-type data supplied from the onomatopoeic/mimetic word processing unit 27 to the rule-based synthesizer 24 specifies a voice type with an emphasized intonation, the rule-based synthesizer 24 produces synthesized voice data such that the onomatopoeic/mimetic word of interest "pounding" in "My heart is <Pmix1>pounding</Pmix1> with gladness." has an emphasized intonation and such that the other parts other than the onomatopoeic/mimetic word of interest "pounding", that is, "My heart is" and "with gladness." have default prosodic characteristics. In a case in which an identification tag <Smix1> is coupled with the onomatopoeic/mimetic word of interest "pounding", synthesized voice data is produced such that an emphasized intonation is given over the entire text "My heart is pounding with gladness."

The synthesized voice data produced in step S25 by the rule-based synthesizer 24 is supplied to the voice mixer 26. Thereafter, the process proceeds from step S25 to S26. In step S26, the voice mixer 26 determines whether acoustic data of a sound effect corresponding to the onomatopoeic/mimetic word of interest has been received from the onomatopoeic/mimetic word processing unit 27.

If it is determined in step S26 that no acoustic data has been received, the process jumps to step S28 without performing step S27. In step S28, the voice mixer 26 directly supplies the synthesized voice data received from the rule-based synthesizer 24 to the speaker 18. Thereafter, the voice synthesis process is ended.

Thus, in this case, the synthesized voice data produced by the rule-based synthesizer 24 (more precisely, a synthesized voice corresponding thereto) is directly output from the speaker 18.

However, when the voice type is specified by the onomatopoeic/mimetic word processing unit 27, the synthesized voice output from the speaker 18 should have a tone or a prosodic characteristic corresponding to the voice type specified for the onomatopoeic/mimetic word of interest so that the tone or the prosodic characteristic of the synthesized voice data represents the meaning of the onomatopoeic/mimetic word of interest.

On the other hand, in a case in which it is determined in step S26 that acoustic data has been received, the process proceeds to step S27. In step S27, the voice mixer 26 mixes the acoustic data with the synthesized voice data received from the rule-based synthesizer 24. Thereafter, the process proceeds to step S28.

In step S28, the voice mixer 26 supplies the synthesized voice data, obtained in step S27 by mixing the acoustic data with the synthesized data, to the speaker 18. Thereafter, the voice synthesis process is ended.

For example, in a case in which the rule-based synthesizer 24 has produced synthesized voice data corresponding to the text "Pour beer into a glass <Pmix1>brimmingly</Pmix1>.", and the onomatopoeic/mimetic word processing unit 27 has produced acoustic data representing a sound effect "gurgle, gurgle" corresponding to the mimetic word "<Pmix1>brimmingly" included in the text, the voice mixer 26 performs mixing in accordance with the identification tag <Pmix1> including P at the beginning and mix following P such that acoustic data representing the sound effect "gurgle, gurgle" is superimposed on the part, corresponding to "brimmingly", of the synthesized voice data corresponding to the text "Pour beer into a glass brimmingly". As a result, when the synthesized voice "Pour beer into a glass brimmingly" is output from the speaker 18, the sound effect "gurgle, gurgle" is superimposed on the part "brimmingly".

On the other hand, in a case in which the rule-based synthesizer 24 has produced synthesized voice data corresponding to "He clapped his hands: <Prep1>clap, clap, clap</Prep1>", and the sound effect generator 30 has produces acoustic data corresponding to the imitative sound effect "clap, clap, clap" included in the text, the voice mixer 26 performs mixing in accordance with the identification tag <Prep1> including P at the beginning and rep following P such that the part, corresponding to the "clap, clap, clap", of the synthesized voce data corresponding to the text "He clapped his hands: clap, clap, clap" is replaced with the acoustic data representing the imitative sound effect "clap, clap, clap". As a result, the synthesized voice "He clapped his hands: clap, clap, clap" whose part "clap, clap, clap" has been replaced with the imitative sound effect is output from the speaker 18.

In the above process, the voice mixer 26 determines which part of the synthesized voice data corresponds to the onomatopoeic/mimetic word, on the basis of the identification tag included in the synthesized voice data.

In a case in which a text include a plurality of onomatopoeias or mimetic words, the voice mixer 26 determines which one of the plurality of onomatopoeias or mimetic words included in the synthesized voice data output from the rule-based synthesizer 24 corresponds to acoustic data output from the onomatopoeic/mimetic word processing unit 27, on the basis of the numeral number included in the identification tag added with the acoustic data and the synthesized voice data.

As described above, by extracting an onomatopoeia or a mimetic word from a text, processing the extracted onomatopoeia or mimetic word, and synthesizing a voice according to the result of the processing on the onomatopoeia or mimetic word, it becomes possible to obtain a synthesized voice including a "sound" effectively representing the meaning of the onomatopoeia or mimetic word.

Although the present invention has been described above with reference to the specific embodiments in which the invention is applied to the entertainment robot (pet robot), the present invention is not limited to such embodiments but the present invention may be applied to a wide variety of systems such as an interactive system in which a voice synthesizer is provided. Furthermore, the present invention can be applied not only to actual robots that act in the real world but also to virtual robots such as that displayed on a display such as a liquid crystal display.

In the embodiments described above, a sequence of processing is performed by executing the program using the CPU 10A. Alternatively, the sequence of processing may also be performed by dedicated hardware.

The program may be stored, in advance, in the memory 10B (Fig. 2). Alternatively, the program may be stored (recorded) temporarily or permanently on a removable storage medium such as a flexible, a CD-ROM (Compact Disc Read Only Memory), an MO (Magnetooptical) disk, a DVD (Digital Versatile Disc), a magnetic disk, or a semiconductor memory. A removable storage medium on which the program is stored may be provided as so-called packaged software thereby allowing the program to be installed on the robot (memory 10B).

The program may also be installed into the memory 10B by downloading the program from a site via a digital broadcasting satellite and via a wireless or cable network such as a LAN (Local Area Network) or the Internet.

In this case, when the program is upgraded, the upgraded program may be easily installed in the memory 10B.

In the present invention, the processing steps described in the program to be executed by the CPU 10A for performing various kinds of processing are not necessarily required to be executed in time sequence according to the order described in the flow chart. Instead, the processing steps may be performed in parallel or separately (by means of parallel processing or object processing).

The program may be executed either by a single CPU or by a plurality of CPUs in a distributed fashion.

The voice synthesis unit 55 shown in Fig. 4 may be realized by means of dedicated hardware or by means of software. When the voice synthesis unit 55 is realized by software, a software program is installed on a general-purpose computer or the like.

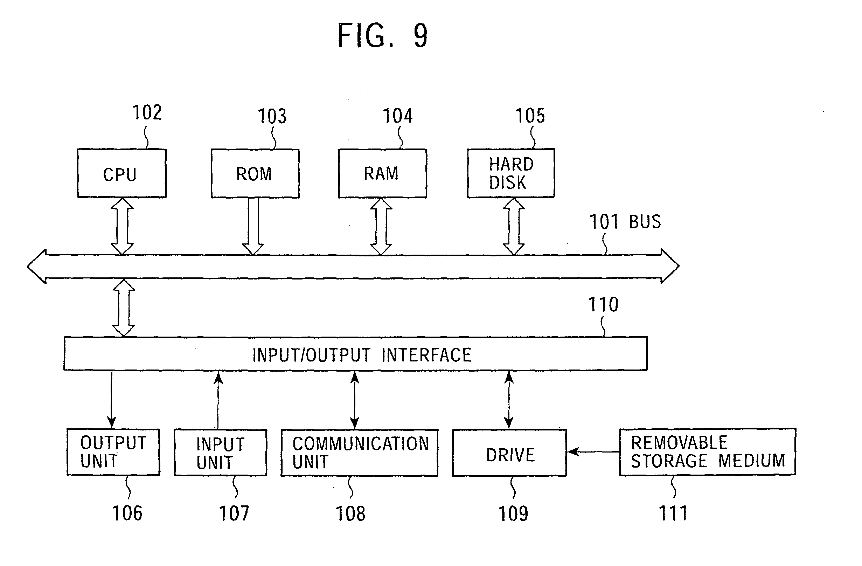

Fig. 9 illustrates an embodiment of the invention in which the program used to realize the voice synthesis unit 55 is installed on a computer.

The program may be stored, in advance, on a hard disk 105 serving as a storage medium or in a ROM 103 which are disposed inside the computer.

Alternatively, the program may be stored (recorded) temporarily or permanently on a removable storage medium 111 such as a flexible disk, a CD-ROM, an MO disk, a DVD, a magnetic disk, or a semiconductor memory. Such a removable storage medium 111 may be provided in the form of so-called package software.

Instead of installing the program from the removable storage medium 111 onto the computer, the program may also be transferred to the computer from a download site via a digital broadcasting satellite by means of wireless transmission or via a network such as an LAN (Local Area Network) or the Internet by means of cable communication. In this case, the computer receives, using a communication unit 108, the program transmitted in the above-described manner and installs the received program on the hard disk 105 disposed in the computer.

The computer includes a CPU (Central Processing Unit) 102. The CPU 102 is connected to an input/output interface 110 via a bus 101 so that when a command issued by operating an input unit 107 including a keyboard, a mouse, and a microphone is input via the input/output interface 110, the CPU 102 executes the program stored in a ROM (Read Only Memory) 103 in response to the command. Alternatively, the CPU 102 may execute a program loaded in a RAM (Random Access Memory) 104 wherein the program may be loaded into the RAM 104 by transferring a program stored on the hard disk 105 into the RAM 104, or transferring a program which has been installed on the hard disk 105 after being received from a satellite or a network via the communication unit 108, or transferring a program which has been installed on the hard disk 105 after being read from a removable recording medium 111 loaded on a drive 109, By executing the program, the CPU 102 performs the process described above with reference to the flow chart or the process described above with reference to the block diagrams. The CPU 102 outputs the result of the process, as required, to an output unit 106 such as an LCD (Liquid Crystal Display) or a speaker via the input/output interface 110. The result of the process may also be transmitted via the communication unit 108 or may be stored on the hard disk 105.

Although in the embodiments described above, a synthesized voice is produced from a text produced by the action decision unit 52, the present invention may also be applied to a case in which a synthesized voice is produced from a text which has been prepared in advance. Furthermore, the present invention may also be applied to a case in which voice data which has been recorded in advance is edited and a synthesized voice is produced from the edited voice data.

In the embodiments described above, acoustic data of a sound effect corresponding to a mimetic word or an onomatopoeia included in a text is reflected in synthesized voice data corresponding to the text. Alternatively, acoustic data may be output in synchronization of an operation of displaying a text.

As for using of acoustic data based on an onomatopoeia or a mimetic word and specifying of a voice type, either one may be selectively performed or both may be performed.

### Industrial Applicability

According to the present invention, as described above, an onomatopoeia or a mimetic word is extracted from an input text and the extracted onomatopoeia or mimetic word is processed. In accordance with the result of the processing on the onomatopoeia or mimetic word, language processing is performed on the input data. Thus, it is possible to produce a synthesized voice effectively representing the meaning of the onomatopoeia or mimetic word.

## Claims

1. A language processing apparatus for performing language processing on input data, comprising:
extraction means for extracting an onomatopoeia or a mimetic word from the input data;
onomatopoeic/mimetic word processing means for processing the onomatopoeia or the mimetic word; and
language processing means for performing language processing on the input data in accordance with a result of the processing on the onomatopoeia or the mimetic word.

2. A language processing apparatus according to Claim 1, further comprising morphological analysis means for performing morphological analysis on the input data,
wherein the extraction means extracts an onomatopoeia or a mimetic word from the input data, in accordance with a result of the morphological analysis on the input data.

3. A language processing apparatus according to Claim 1,
wherein the language processing means
produces a synthesized voice corresponding to the input data; and
processing the synthesized voice in accordance with the result of the processing on the onomatopoeia or the mimetic word.

4. A language processing apparatus according to Claim 3,
wherein the onomatopoeic/mimetic word processing means produces a sound effect corresponding to the onomatopoeia or the mimetic word; and
the language processing means mixes the synthesized voice with the sound effect.

5. A language processing apparatus according to Claim 4, further comprising sound effect storage means for storing at least one sound effect and at least one onomatopoeia or mimetic word related to a corresponding sound effect,
wherein the onomatopoeic/mimetic word processing means reads, from the sound effect storage means, a sound effect related to an onomatopoeia or a mimetic word extracted by the extraction means.

6. A language processing apparatus according to Claim 4, further comprising sound effect information storage means for storing at least one piece of sound effect information used in producing a sound effect and also storing at least one onomatopoeia or mimetic word or character string, which is a part of the onomatopoeia or the mimetic word, in such a manner that each sound effect information is related to a corresponding onomatopoeia, mimetic word, or character string,
wherein the onomatopoeic/mimetic word processing means produces a sound effect corresponding to an onomatopoeia or a mimetic word in accordance with a corresponding piece of sound effect information.

7. A language processing apparatus according to Claim 4,
wherein the language processing means mixes the synthesized voice with the sound effect by superimposing the sound effect on the synthesized voice or replacing a part of the synthesized voice with the sound effect.

8. A language processing apparatus according to Claim 1,
wherein when the language processing means produces a synthesized voice corresponding to the input data,
the onomatopoeic/mimetic word processing means determines the voice type of the synthesized voice in accordance with the onomatopoeia or the mimetic word; and
the language processing means produces the synthesized voice of the voice type determined in accordance with the onomatopoeia or the mimetic word.

9. A language processing method for performing language processing on input data, comprising the steps of:
extracting an onomatopoeia or a mimetic word from the input data;
processing the onomatopoeia or the mimetic word; and
performing language processing on the input data in accordance with a result of the processing on the onomatopoeia or the mimetic word.

10. A program for causing a computer to perform language processing on input data, comprising the steps of:
extracting an onomatopoeia or a mimetic word from the input data;
processing the onomatopoeia or the mimetic word; and
performing language processing on the input data in accordance with a result of the processing on the onomatopoeia or the mimetic word.

11. A storage medium including a program, stored therein, for causing a computer to perform language processing on input data, said program comprising the steps of:
extracting an onomatopoeia or a mimetic word from the input data;
processing the onomatopoeia or the mimetic word; and
performing language processing on the input data in accordance with a result of the processing on the onomatopoeia or the mimetic word.
